# EUROPEAN PATENT SPECIFICATION

(11) **EP 0 624 219 B1**
(45) Date of publication and mention of the grant of the patent: **02.07.1997**
(21) Application number: 93902610.0
(22) Date of filing: 21.12.1992
(51) Int. Cl.: E04F 11/02, F16B 7/04, F16L 13/14

(54) **CONNECTING DEVICE**
VERBINDUNGSVORRICHTUNG
DISPOSITIF DE RACCORDEMENT

(30) Priority: 21.01.1992 SE 9200179
(43) Date of publication of application: 17.11.1994
(73) Proprietor: WELAND AB, S-333 31 Smalandsstenar (SE)
(72) Inventor: WELANDSSON, Gösta, S-333 31 Smalandsstenar (SE)
(74) Representative: Wallengren, Yngvar
(86) International application number: SE9200886
(87) International publication number: WO9314284

(56) References cited:
- DE-A- 1 525 648
- DE-A- 2 949 814
- DE-B- 2 806 764
- US-A- 4 123 180
- US-A- 4 557 467

## Description

### TECHNICAL FIELD

The present invention relates to a connection of a first and a second tube via an inner tube.

### BACKGROUND ART

In the manufacture of spiral stairs, a central column is employed which consists of tubes and which is normally divided up into sections with interconnections between the different sections included in the central column. As far as possible, this central column should have a smooth outer surface, since the staircase steps are screwed in place via anchorage plates which abut against the outer surface of the central column. Furthermore, it is crucial that the central column is straight despite the division into sections.

Those loadings which the central column (or the entire spiral staircase) must be capable of withstanding are primarily loadings from normal use, i.e. essentially axial pressure loadings towards the central column. For safety reasons, the central column must also be capable of withstanding such axial upward draught as might, for example, be caused by the shock wave from an explosion on a lower storey level. Thus, the staircase must mot fail even in the event of such reverse loading.

Spiral staircases of the type under consideration here are often used outdoors or in an industrial environment which may be corrosive. For this reason, the components of the spiral staircase are surface treated, often by hot galvanizing.

In prior art devices for interconnecting central columns, holes are made in the circumferential surface of the outer tube, whereafter the inner tube is welded in place through these holes.

Since the tubes employed in the central column do not possess particularly good tolerances, there is a risk that the above-described welding operation results in the centre axes of the outer and the inner tube not coinciding with one another. Thus, problems relating to precision have commonly occurred in this prior art technique.

The welding of the inner tube in the above-described manner has also entailed demands for considerable after-treatment if the outer surface of the outer tube is to be smooth. Furthermore, it has not proved possible to employ tubes hot galvanized beforehand, but it has been necessary instead to carry out the cutting, welding and finishing work before performing the hot galvanizing. This entails requirements on costly transport to and from the hot galvanizing plant.

Other types of connections are known from US-A-4 123 180 and DE-A-2 949 814.

US-A-4 123 180 discloses a connector system adapted to construction of temporary and permanent store displays, furniture, shelves and the like. The system includes a joining member having a number of insertion members for being inserted into the tubes to be connected. Each insertion member has recesses in the side thereof. Each recess is provided with a resilient spring element for frictionally engaging an internal surface of a tube to be connected.

The connector system of this patent does not provide the necessary strength in the connection and could, therefore, not be used for connecting sections of the central column of a spiral stair.

DE-A-2 949 814 discloses a connector device for square tubes. This device uses a connector element made from a square tube and having its side surfaces concavely deformed. When using this connecting element it is placed inside the square tubes to be connected and bridging the joint therebetween. By means of screws the concave side surfaces are expanded to clamp against internal surfaces of the tubes being connected.

This connector device is limited to square tubes and does not offer the strength required in central columns for spiral stairs.

### PROBLEM STRUCTURE

The present invention has for its object to realize a device of the type mentioned by way of introduction, the device being designed in such a manner as to obviate the drawbacks inherent in prior art techniques. In particular, the present invention has for its object to realize a device which offers an automatic and accurate centering between the inner and outer tube, irrespective of defects in surface quality thereof, and irrespective of defects in their tolerances. The present invention also has for its object to realize a device which permits interconnecting of previously surface-treated, principally hot galvanized, tubes without damaging the surface treatment. Finally, the present invention also has for its object to realize a device which gives an extremely durable and economical interconnection.

### SOLUTION

The objects forming the basis of the present invention will be attained if the connection intimated by way of introduction is given the characterising features of claim 1.

According to one preferred embodiment of the present invention, the depressions and bulges are suitably also disposed with uniform distribution in the circumferential direction.

This embodiment is suitably also characterized in that the depressions and bulges are disposed in rows parallel with the longitudinal axis of the inner tube.

These characterizing features afford an interconnection which automatically aligns the two tubes in relation to one another so that the centre axes of the tubes will coincide.

### BRIEF DESCRIPTION OF THE ACCOMPANYING DRAWINGS

The present invention will now be described in greater detail hereinbelow, with particular reference to the accompanying Drawings. In the accompanying Drawings:
Fig. 1 shows a section of such tubes, for example a central column for a spiral staircase, as are to be interconnected according to the invention; and
Fig. 2 shows an axial and diametric cross section through an interconnection region.

### DESCRIPTION OF PREFERRED EMBODIMENT

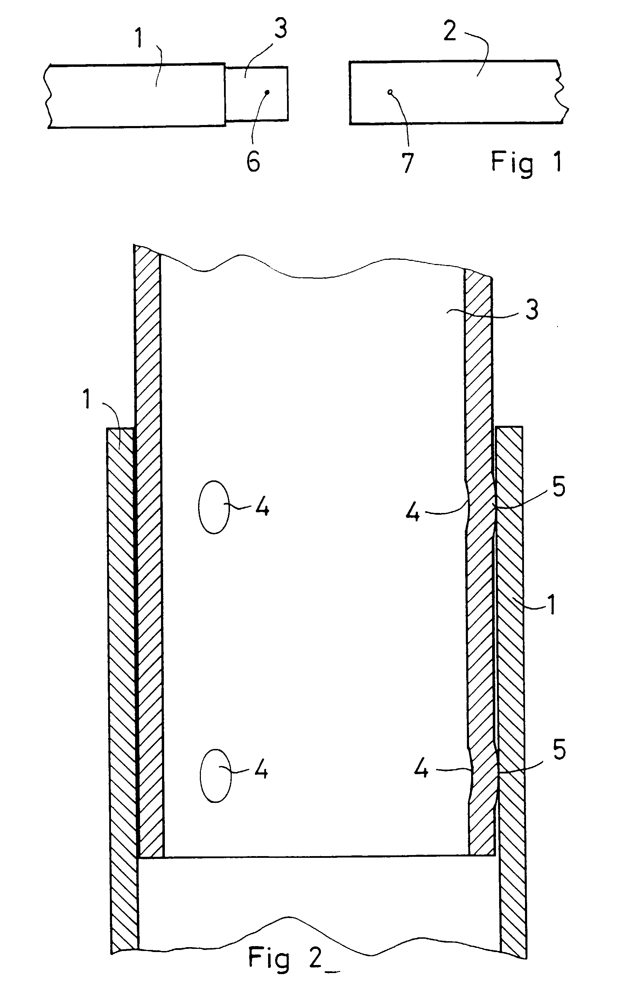

Fig. 1 shows a section from a central column for a spiral staircase, and it is apparent that this central column is divided into sections in which the left-hand section in the Figure is shown with its upper end, while the right-hand section in the Figure is shown with its lower end. The sections comprise a first and second outer tube 1 and 2, respectively, and further an inner tube 3 which is located in the interconnection region between the sections and which, prior to the interconnection, is inserted a certain distance in the first outer tube. The tolerances between the inner tube 3 and the outer pipe 2 are such that the inner tube may substantially closely be slid into the outer tube 2. Furthermore, the inner tube is permanently secured in the outer tube 1.

For interconnecting the two sections, the inner tube 3 has threaded through-holes 6 and the outer tube 2 has through-holes 7 in which screws are placed.

Fig.2 shows an axial diametric section through the interconnection region of the outer tube 1 and the inner tube 3. It will be apparent from the Drawing that the inner tube 3 is inserted in a portion of the outer a distance which at least amounts to the diameter of the inner tube, but preferably more.

The inner tube 3 is provided with a number of depressions and bulges 4 which have been realized by pressure means having been applied against the inner surface of the inner tube and pressed hard against the surface. As a result of this pressing operation, impressions have been formed on the inner surface of the inner tube, which, on the outside of the inner tube, correspond to bulges 5. The bulges 5 engage hard against the inner surface in the outer tube 1 and may possibly have caused minor depressions therein. However, the grip between the outer and the inner tubes is substantially caused via friction.

It will be apparent from Fig. 1 that the abutment between the inner and the outer tubes in the left-hand side of the Figure is effected more or less via a surface contact, while the abutment in the right-hand side of the Figure is realized substantially by means of the bulges 5. This entails that the play which existed between the tubes has been "gathered up" in the region of the bulges.

According to the present invention, several depressions and bulges are employed, which have regular distribution in the circumferential direction. Fig. 2 shows one embodiment in which three bulges are disposed with 120° distribution in a common diametric plane to the tubes, it will also be apparent that two such groups with bulges are disposed in axial spaced-apart relationship and that the bulges in both groups are in lines which are parallel with the centre axis of the two tubes.

In the production of the bulges, it is crucial that at least the bulges in the same diametric plane to the tubes are created simultaneously. Hereby, accurate centering will be ensured of the tubes so that the risk is avoided that the inner tube rests eccentrically in relation to the outer tube. In practice however, the pressing-out of all six bulges 5 takes place simultaneously.

The embossed portions 4 are achieved in that pin-shaped, ball-shaped or other suitable pressure means are applied against the inner surface of the inner tube 3 and are forced radially outwards. This pressing operation is carried out without any stop, dolly or other configurational stabilization means being employed against the outer surface of the outer tube 1. The pressing operation is executed with such force that the bulges 5 on the inner tube 3 create a certain elastic deformation in the outer tube so that this can, to some extent, become "triangular" if a distribution of 120° is employed between the embossings. However, this deformation mostly recedes when the pressure means are removed so that the outer surface of the outer tube remains unaffected. In such a case, surface or linear abutment between the tube surfaces will take place between the corners in the "triangle shape" while, on the other hand, the clearance or play which existed between the tubes prior to production of the deformations will be gathered up at these portions.

The above-described interconnection technique implies that extremely great forces which are caused by elastic deformations in the tube material - primarily the outer tube material - realize such a high degree of friction between the tubes that these can be considered as permanently interconnected. Possibly, a rigid engagement may, to some extent, also be effected between the bulges 5 and corresponding depressions in the inner surface of the outer tube 1.

### DESCRIPTION OF ALTERNATIVE EMBODIMENTS

In the foregoing, it has been presupposed that the embossed portions 4 are six in number and are disposed in threes with a distribution of 120° in the diameter plane. Naturally, four or five, or possibly more embossed portions can also be employed in each diameter plane, and the deformations may possibly also be disposed in more diameter planes than the two disclosed above.

According to the present invention, it may also be possible to employ a different number of bulges 5 in different diameter planes, and also to turn one group of bulges 5 in one diameter plane in relation to another group.

In the foregoing, it has been presupposed that the tubes 1, 2 and 3 are cut from tubes which have been previously given their surface treatment, preferably hot galvanizing. There is no risk for damage to the hot galvanization employing the above-described interconnection technique. However, it is fully possible to realize the interconnection between the tubes first and thereafter carry out surface treatment of the tubes.

Embodiments are also possibly conceivable in which the bulges 5 are produced at the wall of the inner tube 3 before this is inserted with its one end portion into the outer tube 1. However, in such an event the mounting operation would require a considerable insertion driving force for the inner tube.

The present invention may be modified further without departing from the scope of the invention as defined in the appended Claims.

## Claims

1. A connection of a first (1) and a second (2) tube via an inner tube (3), **characterised in that**, the inner tube (3) has a number of internal depressions (4) having been made by means of pressure means being urged against the internal surface of the inner tube and forcibly pressed thereagainst, thereby causing bulges (5) on the external surface of the inner tube, the bulges (5) engaging the first tube with a tight fit.

2. The connection as claimed in claim 1, **characterised in that**, the depressions and the bulges (5) are provided after inserting the inner tube (3) into the first tube (1).

3. The connection as claimed in claim 1, **characterised in that**, the depressions and the bulges (5) are provided prior to introducing the inner tube into the first tube (1).

4. The connection as claimed in any one of claims 1-3, **characterised in that**, the depressions and the bulges (5) are provided with uniform distribution in the circumferential direction.

5. The connection as claimed in any one of claims 1-4, **characterised in that**, the depressions and the bulges (5) are provided in rows parallel to the longitudinal axis of the inner tube (3).

6. The connection as claimed in any one of claims 1-5, **characterised in that**, the depressions and the bulges (5) provided in the same diameter plane have been made concurrently.

7. The connection as claimed in any one of claims 1-6, **characterised in that**, all depressions and bulges (5) have been made concurrently.

## Patentansprüche

1. Verbindung eines ersten (1) und eines zweiten (2) Rohres über ein inneres Rohr (3), dadurch gekennzeichnet, daß das innere Rohr (3) eine Anzahl von inneren Vertiefungen (4) hat, die mittels einer Druckeinrichtung erzeugt wurden, die gegen die Innenfläche des inneren Rohres gezwungen und gewaltsam dagegen gedrückt wird, wodurch Ausbauchungen (5) an der Außenfläche des inneren Rohres entstehen, wobei die Ausbauchungen (5) in das erste Rohr mit fester Passung eingreifen.

2. Verbindung nach Anspruch 1, dadurch gekennzeichnet, daß die Vertiefungen und die Ausbauchungen (5) nach dem Einführen des inneren Rohres (3) in das erste Rohr (1) vorgesehen werden.

3. Verbindung nach Anspruch 1, dadurch gekennzeichnet, daß die Vertiefungen und die Ausbauchungen (5) vor dem Einführen des inneren Rohres in das erste Rohr (1) vorgesehen werden.

4. Verbindung nach einem der Ansprüche 1 bis 3, dadurch gekennzeichnet, daß die Vertiefungen und die Ausbauchungen (5) gleichförmig verteilt in der Umfangsrichtung vorgesehen sind.

5. Verbindung nach einem der Ansprüche 1 bis 4, dadurch gekennzeichnet, daß die Vertiefungen und die Ausbauchungen (5) in Reihen parallel zu der Längsachse des inneren Rohres (3) vorgesehen sind.

6. Verbindung nach einem der Ansprüche 1 bis 5, dadurch gekennzeichnet, daß die Vertiefungen und die Ausbauchungen (5), die in derselben Durchmesserebene vorgesehen sind, gleichzeitig hergestellt wurden.

7. Verbindung nach einem der Ansprüche 1 bis 6, dadurch gekennzeichnet, daß alle Vertiefungen und Ausbauchungen (5) gleichzeitig hergestellt wurden.

## Revendications

1. Dispositif de raccordement d'un premier tube (1) et d'un deuxième tube (2) par l'intermédiaire d'un tube intérieur (3), caractérisé en ce que le tube intérieur (3) présente un certain nombre de creux (4) engendrés dans sa surface intérieure par des moyens de pression appliqués contre la surface intérieure du tube intérieur et pressés avec force contre cette surface, de manière à engendrer des bosses (5) sur la surface extérieure du tube intérieur, les bosses (5) étant en contact à ajustement serré avec le premier tube.

2. Dispositif de raccordement suivant la revendication 1, caractérisé en ce que les creux et les bosses (5) sont engendrés après insertion du tube intérieur (3) dans le premier tube (1).

3. Dispositif de raccordement suivant la revendication 1, caractérisé en ce que les creux et les bosses (5) sont engendrés avant introduction du tube intérieur dans le premier tube (1).

4. Dispositif de raccordement suivant une quelconque des revendications 1 à 3, caractérisé en ce que les creux et les bosses (5) sont formés suivant une répartition uniforme dans la direction circonférentielle.

5. Dispositif de raccordement suivant une quelconque des revendications 1 à 4, caractérisé en ce que les creux et les bosses (5) sont prévus en rangées parallèles à l'axe longitudinal du tube intérieur (3).

6. Dispositif de raccordement suivant une quelconque des revendications 1 à 5, caractérisé en ce que les creux et les bosses (5) prévus dans lemême plan diamétral sont engendrés simultanément.

7. Dispositif de raccordement suivant une quelconque des revendications 1 à 6, caractérisé en ce que tous les creux et bosses (5) sont engendrés simultanément.
